# EUROPEAN PATENT SPECIFICATION

(11) **EP 1 816 585 B1**
(45) Date of publication and mention of the grant of the patent: **08.04.2009**
(21) Application number: 06425049.1
(22) Date of filing: 01.02.2006
(51) Int. Cl.: G06K 7/10, G06K 7/08

(54) **Hand-held reading device for reading coded information**
Tragbarer Leser für kodierte Informationen
Dispositif portatif de lecture d'information codée

(43) Date of publication of application: 08.08.2007
(73) Proprietor: DATALOGIC S.P.A., 40012 Lippo di Calderara di Reno (Bologna) (IT)
(72) Inventor: Mazzone, Claudio, 40056 Crespellano (Bologna) (IT); Vassura, Stefano, 40067 Rastignano (Bologna) (IT)
(74) Representative: Checcacci, Giorgio

(56) References cited:
- EP-A- 1 128 314
- DE-U1- 20 016 762
- US-A1- 2005 023 358

## Description

The present invention relates to a device for reading coded information and, in particular, to a coded information reader of the manual type.

By the term "coded information" it is ment an "optical code", that is, a set of graphical signs (located on a label or directly on a product) by which information is coded as a sequence of white zones and black zones, or of differently coloured zones, arranged according to one or more directions. Examples of such codes are barcodes, stacked codes, bidimensional codes, colour codes and others. The term "optical code" further comprises in general, other graphical patterns with the function of coding information, including printed characters (letter, numbers) or special patterns, such as for example stamps, logos, signatures. By "Coded information" it is also ment any information, or set of information, coded and stored to a transponder (which generally is a part of a "tag" or a label) which may be read and/or written in a known manner by a radiofrequency reading and/or writing device (better known as RFID reader).

In the present context, the term "manual" is intended to indicate all reading devices which may be gripped, such as those of the wireless type that communicate with a base through radio waves, also known with the term "cordless" or "portable", those provided with memory for storing data (which are subsequently downloaded in the memory of the base), also known under the term "batch", cordless devices which may also operate in "batch" mode, as well as the devices connected to the base or to a special calculator by means of a cable.
Generally, manual devices for reading optical codes, in particular barcodes, comprise an outer casing of the hand-held type housing at least one electronic circuit and, in the case of wireless devices, a rechargeable battery for powering the electronic circuit and the other inner components.

If the coded information is an optical code, the reader further comprises a light source, for example consisting of an array of LED diodes and optionally an illumination optics, adapted for illuminating an optical code, for example a barcode, and a receiving optics and a linear or matrix light sensor, of the charge coupling type (CCD) or of the complementar metal-oxide-semiconductor type (C-MOS), cooperating with the electronic circuit and adapted for receiving the light diffused by the code. After the focusing is carried out by means of the receiving optics, the light sensor is adapted for receiving the light diffused by subsequent adjacent portions of the code while the reader is manually positioned facing the code itself, in contact therewith or spaced therefrom; in this way, the light sensor is adapted for generating a signal modulated by the succession of the elements of different colour (for example, by clear and dark bars in the case of a barcode reading) of the code. Such alternating signal is processed by the electronic circuit for extracting the alphanumerical information associated with the optical code.

Further there are manual reading devices of the "retroreflective" type, wherein the optical code is read by subsequently illuminating the various zones of the optical code by means of a collimated beam, typically laser, and by detecting the light diffused by the optical code zone illuminated time by time.

In the present description, the term "light" is used with a wide meaning for indicating not only electromagnetic radiation in the visible spectrum, but also electromagnetic radiation of such wavelengths as to be manipulated with the optical techniques usable for the visible spectrum, thus including also the UV and IR regions.

If the coded information is stored to a transponder, the reading device generates an electromagnetic field at a frequency of excitation for the transponder which, once entered into said field, transmits to the reading device a signal which contains the code stored in the transponder itself. A similar method is used for writing information in the transponder.

The coded information may also be a combination of one or more optical codes and a transponder. In fact, reading devices provided with optical and electronic members for reading both types of information are known.

Known readers are often provided with a display device (for example consisting of a liquid crystal display) cooperating with the electronic circuit for displaying the alphanumerical information obtained from the code reading.

The outer casing of the reader generally comprises a central body containing all the code reading members and a user grip portion.

When the code reader is used, the user detects an operating status thereof, for example the correct decoding of a code, usually through a luminous indicator. Such luminous indicator is generally provided at an upper portion of the reader central body. Generally, such portion comprises a portion substantially transparent to the light emitted by an underlying LED which acts as luminous indicator of the operation.

Said substantially transparent portion has reduced dimensions and is defined by a "gem", i.e. a window, associated with the casing of the reader. Thus, when the operator places the reader in particular positions, such as for reading codes on items arranged on a very high or low shelf, the gem is often out of the visual field. As a consequence, the user is not able to check whether the reader is working properly or which is the operating status thereof, and in particular, whether the code is correctly read.

In some cases, the successful reading of an optical code is indicated, additionally or alternatively to the visual signal, by a sound signal, but the latter is often imperceptible in industrial environments, in storehouses and in manufacturing plants. In order to obviate these disadvantages, the European patent application No. 1128314 and the utility model application No. MI99U000636 in the name of the same Applicant disclose an optical code reader comprising at least one portion of a structural portion of its outer casing made of a material transparent to light so as to directly diffuse, through such portion, the light emitted by the luminous indicating elements with which the reader is provided.

Such solution, however, is economically disadvantageous since the complexity of the mould for manufacturing the casing, generally in plastic material, is considerably high as at least two materials must be used, one of opaque plastic and one of transparent or semi-transparent plastic. This implies a considerable increase of costs from both the materials and, above all, the manufacturing process point of view.

The use of transparent material, moreover, limits the possibility of choice of the material itself and, if used for making wide areas of the device, causes negative consequences in terms of ergonomics (e.g., gripping easiness) of the final product. Since the reader is generally carried by a user moving within an industrial environment, the ergonomics thereof is an essential feature.

Moreover, the use of a transparent material for manufacturing the casing may imply constructional constraints in manufacturing the mould since it is not technically possible to make the transparent portion in a totally arbitrary position of the casing.

Another solution to the above problem is described in the European patent application No. 1396811 in the name of the same Applicant which discloses an optical code reader which provides for the projection of a luminous indicator directly onto the code as an indication of successful reading. However, when the operator operates from a large distance (as may happen, for example, in storehouses), he is not able to see such indicator and thus to check whether the reading has been carried out.

US 2005/023358 A1 discloses an ergonomic single-line compact laser bar code scanning system having a compact housing for hand-held disposition at a counter. The scanning system is automatically-activated and includes a bar code symbol reading mechanism contained within a hand supportable housing having a manually-activable data transmission switch formed integrally in the housing. During symbol reading operations, the bar code symbol reading mechanism automatically generates a visible laser scanning pattern for repeatedly reading one or more bar code symbols on an object during a bar code symbol reading cycle, and automatically generating a new symbol character data string in response to each bar code symbol read thereby. During system operation, the user visually aligns the visible laser scanning pattern with a particular bar code symbol on an object (e.g., product, bar code menu, etc.) so that the bar code symbol is detected, scanned and decoded. The user depresses the data transmission switch to produce a data transmission control activation signal and enabling a currently or subsequently produced symbol character data string to be automatically selected and transmitted to a host system.

The object of the present invention therefore is to provide a hand-held coded information reader which allows the operator to check the operating status of the reader in a simple, rapid and reliable manner independently from the orientation of the reader and which is at the same time economic and functional.

Such object is achieved by a hand-held device for reading coded information in accordance with claim 1. Preferred embodiments are described in the subsequent claims.

The device according to claim 1 allows an operator to detect at least one operating status during use, independently from the orientation of the device and from the distance from the code read.

The device according to claim 1, moreover, is economic to be manufactured.

Advantageously, the device is provided with luminous indicating elements adapted for emitting a light, of continuous or intermittent type, which allows easy detection of the position of the device itself. In fact, since portable readers are basically used in industrial applications, it is often left or lost in scarcely illuminated zones and it is therefore difficult to locate the position thereof. This problem is even more felt when the reader is shared by multiple operators.

Further features and advantages of the invention will be clear from the following description of a preferred embodiment thereof, made by way of a non-limiting example with reference to the annexed drawings, wherein:
- figure 1 shows a top perspective view of the manual device for reading coded information according to the present invention;
- figure 2 shows a right perspective side view of the manual device for reading coded information according to the present invention;
- figure 3 shows a left perspective side view of the manual device for reading coded information according to the present invention.

With reference to these figures, there is shown a manual device for reading coded information, in particular optical codes, provided with an outer casing 1 that defines a central body 2 and a grip portion 3.

Said outer casing 1 is adapted for containing the optical, electrical and/or electronic members for reading the optical code therein. Said members are of known type and therefore, they will not be further described within the scope of the present description.

The device comprises at least two luminous indicating elements, preferably LED type sources, arranged at corresponding windows 4 obtained in the outer casing 1.

According to the present invention, such LEDs indicate an operating status, in particular the status of successful code reading, by lighting up substantially at the same time.

Windows 4 corresponding to such LEDs, according to the present invention, are arranged in the space so as to define non-coincident planes. In fact, arranging said windows 4 on different planes, the light emitted by the LEDs and diffused through such windows 4 covers a wide visual angle. In this way, the operator is capable of detecting the successful reading status at different orientations of the device.

Preferably, the device is provided with two LEDs at two windows 4 that define two planes, which intersect each other forming an angle α wider than 180°. More preferably, the width of said angle α is more than or equal to 270° and, even more preferably, it is more than 300°.

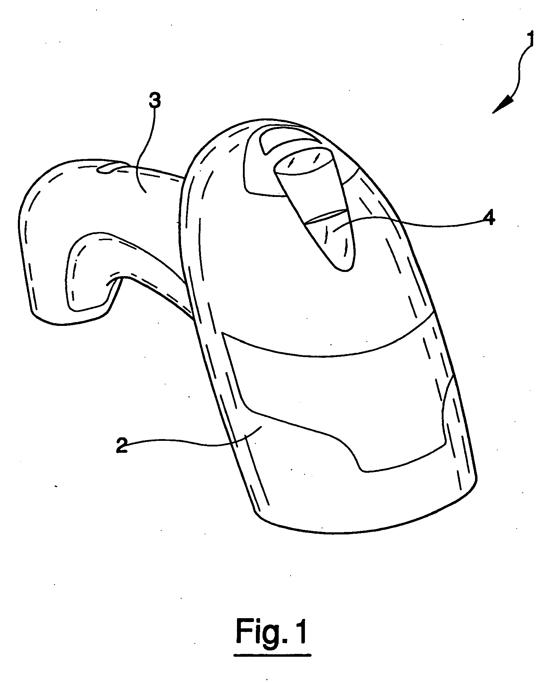

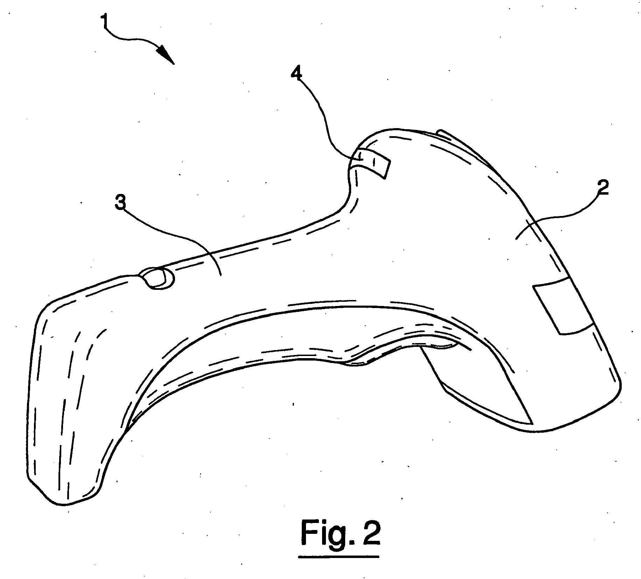

According to the preferred embodiment of the present invention, the device is provided with a first LED and therefore, with a first indicating window 4, on the top surface of the central body 2, as shown in figure 1, and with a second LED, and therefore with a second indicating window 4, at a bottom portion of the central body 2. More in particular, said second LED and said second indicating window 4 are arranged close to the grip portion 3 and on the portion which results to be the closest to the operator during use, as can be seen in figure 2.

The indicating windows are made of a transparent or semi-transparent plastic material.

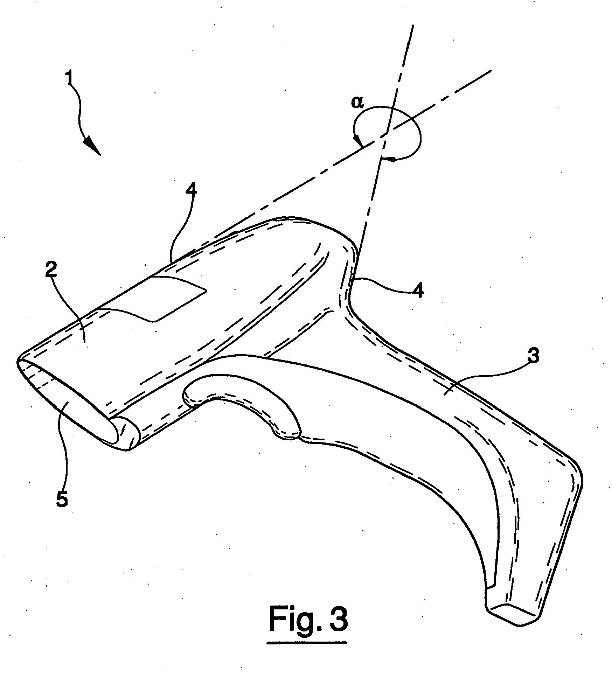

In the configuration shown in such figures, the width of angle α formed by the two planes defined by windows 4 of the outer casing 1 is of 318°, as can be seen in figure 3.

The device is further provided with a optical code reading window 5. The light beams emitted by the light source of the device and the light reflected by the optical code pass through such reading window 5 in a known manner.

According to a preferred embodiment of the invention, the luminous indicating elements are adapted for lighting up when the device is in stand-by (i.e. in low energy consumption status) and preferably, after a certain time after the activation of the stand-by status. Preferably, the LEDs flash intermittently. In this way, it is possible to determine rapidly the device position without excessive energy waste caused, for example, by a continuous light emission.

Such functionality is preferably provided in addition to that of indicating the successful reading by means of the same indicating elements.

According to an alternative embodiment of the invention, the device is provided with further luminous indicating elements, preferably sources of the LED type, arranged at windows 4 of the outer casing 1. Said further luminous indicating elements are adapted for emitting light in a continuous or intermittent manner when the device is in stand-by. Such LEDs preferably have a different colour with respect to the LEDs used for indicating the successful reading. For example, it is possible to use green coloured LEDs for indicating the successful reading and white or red coloured LEDs for indicating the stand-by status.

It is possible to provide the device with a further luminous indicating element at the reading window 5. In this way, the light emitted by such luminous indicating elements has a stronger intensity and cover a visual angle of 360°.

As an alternative, in the stand-by status, the same light reading source may be switched on continuously or intermittently. Such embodiment exhibits the advantage that the total luminous indication is even greater, but in some cases it exhibits the disadvantage of a higher energy waste since generally, the reading source have a higher consumption than a single LED if it consists of an array of LEDs.

The lighting up of the luminous indicating elements in the stand-by status may be programmed during the manufacturing of the reading device or by the operator himself by means of a special control interface. As an alternative or in addition, if the device is portable and associated with a base, it is possible to provide for the operator to remotely control the lighting up of the luminous indicating elements, by a control provided on the base.

Advantageously, the outer casing 1 of the reading device may be provided with additional windows adapted for diffusing the light emitted by the luminous indicating elements and optionally, by the further luminous indicating elements. They may be obtained in the central body 2, preferably at the side portions thereof, or in the grip portion 3.

According to a variation of the invention, the device comprises sound and/or visual indicating means actuable from a base of the same device. In other words, it is possible to provide the base of the device with a control capable of actuating said sound and/or visual indicating means only when the position of the device must be determined. Said means may be provided as an alternative or in addition to said further luminous indicating elements.

Any variations and/or additions may be made by those skilled in the art to the embodiments described and illustrated herein without departing from the scope of the present invention.

For example, the luminous indicating elements and thus the corresponding windows 4, may be more than two and arranged in different positions, such as for example in the grip portion 3 of the device.

Windows 4 may also be simple holes in the reader casing, thus no material facing the luminous indicating elements being provided. In this way, the cost of the device is further reduced since the cost of the transparent plastic material and that of the labour for applying the same windows to the casing is eliminated.

Each luminous indicating element may emit light of a specific colour, the colours of the two (or more) elements also differing from one another and being settable by the operator according to his needs and to the work environment.

Each luminous indicating element may emit light of different colours as programmed by the operator. In fact, it is possible to use multi-chip RGB LEDs.

Moreover, it is possible to use the luminous indicating elements for detecting not only the successful reading of the optical device and/or for indicating the stand-by status, but also other operating status. In this case, it is possible to use indicating elements of different colours for different operating status. For example, it is possible to indicate the unsuccessful reading of a code with a red light, while the successful reading is indicated with a green light.

Other operating status which may be indicated according to the invention are the while-reading optical code (which is an indication of the operating status of the reader), the successful transfer of the information read to a base or to a host computer (if the reader is portable and provided with radio interface), the battery status (for portable and batch readers), the successful loading of software, or also the completion of the reader programming.

In the case of radiofrequency devices for reading and/or writing tags or electronic labels, the reading window is a portion of the casing not necessarily open or transparent, at which there is arranged an antenna for emitting and receiving the electromagnetic radiation for reading and/or writing the transponder associated with the tag or label.

All the above described variations for an optical code reader are applicable to a reader of this type.

## Claims

1. A hand-held device for reading coded information, comprising:
- an outer casing (1) adapted for containing optical, and/or electronic members for reading the coded information;
- a first luminous indicating element adapted for indicating at least one operating status of said device and arranged at a first indicating window (4) obtained in said outer casing (1); and
- a coded information reading window (5),
**characterised in that** it is provided with at least a second luminous indicating element adapted for indicating said operating status and arranged at a second indicating window (4) obtained in said outer casing (1), said first and second indicating windows (4) being arranged on different planes, so as to allow a user to detect said operating status at different orientations of the device.

2. A hand-held device for reading coded information according to claim 1, **characterised in that** said at least one second luminous indicating element is only one and said first and second indicating windows (4) define planes which form with each other an angle α of a width of more than 180°.

3. A hand-held device for reading coded information according to claim 2, **characterised in that** the width of said angle α is preferably more than or equal to 270°.

4. A hand-held device for reading coded information according to claim 3, **characterised in that** the width of said angle α is equal to 318°.

5. A hand-held device for reading coded information according to anyone of the previous claims, **characterised in that** said at least one operating status is the status of successful reading of the coded information.

6. A hand-held device for reading coded information according to anyone of the previous claims, **characterised in that** said at least one operating status is the stand-by status.

7. A hand-held device for reading coded information according to anyone of the previous claims, **characterised in that** the device is a device for reading an optical code.

8. A hand-held device for reading coded information according to anyone of the previous claims, **characterised in that** the device is a device for the radiofrequency reading of a transponder.

9. A hand-held device for reading coded information according to anyone of the previous claims, **characterised in that** at least one of said luminous indicating elements comprises a LED.

10. A hand-held device for reading coded information according to anyone of the previous claims, **characterised in that** said luminous indicating elements are adapted for emitting light continuously when the device is in stand-by status.

11. A hand-held device for reading coded information according to anyone of claims 1-9, **characterised in that** said luminous indicating elements are adapted for flashing intermittently when the device is in stand-by status.

12. A hand-held device for reading coded information according to anyone of claims 1-9, **characterised in that** it is provided with further luminous indicating elements arranged at said windows (4), adapted for emitting light continuously when the device is in stand-by status.

13. A hand-held device for reading coded information according to anyone of claims 1-9, **characterised in that** it is provided with further luminous indicating elements arranged at said windows (4), adapted for flashing intermittently when the device is in stand-by status.

14. A hand-held device for reading coded information according to anyone of the previous claims, **characterised in that** it is provided with a further luminous indicating element arranged at the code reading window (5), which is adapted for emitting light continuously when the device is in stand-by status.

15. A hand-held device for reading coded information according to anyone of the previous claims, **characterised in that** it is provided with a further luminous indicating element arranged at the window (5) for reading the code, which is adapted for flashing intermittently when the device is in stand-by status.

16. A hand-held device for reading coded information according to anyone of claims 12-15, **characterised in that** at least one of said further luminous indicating elements comprises a LED.

17. A hand-held device for reading coded information according to anyone of the previous claims, **characterised in that** the outer casing (1) is provided with additional windows adapted for diffusing the light emitted by the luminous indicating elements and/or by the further luminous indicating elements.

18. A hand-held device for reading coded information according to anyone of the previous claims, **characterised in that** it is provided with sound indicating means adapted for indicating at least one operating status of said device.

19. A hand-held device for reading coded information according to anyone of the previous claims, **characterised in that** it is provided with sound means for individuating the position of the device, actuable from a base of the same device.

20. A hand-held device for reading coded information according to anyone of the previous claims, **characterised in that** it is provided with visual means for individuating the position of the device, actuable from a base of the same device.

## Patentansprüche

1. Hand-Gerät zum Lesen von codierter Information, das folgendes umfasst:
- ein äußeres Gehäuse. (1), das geeignet ist, optische und/oder elektronische Elemente zum Lesen der codierten Information zu beherbergen;
- ein erstes leuchtendes Anzeigeelement, das geeignet ist, mindestens einen Betriebsstatus des Gerätes anzuzeigen und das bei einem ersten Anzeigefenster (4) angeordnet ist, welches in dem Außengehäuse (1) vorgesehen ist; und
- ein Fenster (5) zum Lesen codierter Information,
**dadurch gekennzeichnet, dass** es mit mindestens einem zweiten leuchtenden Anzeigeelement versehen ist, welches geeignet ist, den Betriebszilstand anzuzeigen und das bei einem zweiten Anzeigefenster (4) angeordnet ist, welches in dem Außengehäuse (1) vorgesehen ist, wobei das erste und das zweite Anzeigefenster (4) auf unterschiedlichen Ebenen angeordnet sind, um es einem Nutzer zu gestatten, den Betriebszustand bei unterschiedlichen Orientierungen des Gerätes wahrzunehmen.

2. Hand-Gerät zum Lesen codierter Information nach Anspruch 1, **dadurch gekennzeichnet, dass** das mindestens eine zweite leuchtende Anzeigeelement genau eines ist und das erste und das zweite Anzeigefenster (4) Ebenen definieren, die miteinander einen Winkel α von mehr als 180° bilden.

3. Hand-Gerät zum Lesen codierter Information nach Anspruch 2, **dadurch gekennzeichnet, dass** der Winkel α vorzugsweise größer oder gleich 270° ist.

4. Hand-Gerät zum Lesen codierter Information nach Anspruch 3, **dadurch gekennzeichnet, dass** der Winkel α gleich 318° ist.

5. Hand-Gerät zum Lesen codierter Information nach einem der vorhergehenden Ansprüche, **dadurch gekennzeichnet, dass** der mindestens eine Betriebszustand der Zustand des erfolgreichen Lesens von codierter Information ist.

6. Hand-Gerät zum Lesen codierter Information nach einem der vorhergehenden Ansprüche, **dadurch gekennzeichnet, dass** der mindestens eine Betriebszustand der Stand-by-Zustand ist.

7. Hand-Gerät zum Lesen codierter Information nach einem der vorhergehenden Ansprüche, **dadurch gekennzeichnet, dass** das Gerät ein Gerät zum Lesen eines optischen Codes ist.

8. Hand-Gerät zum Lesen codierter Information nach einem der vorhergehenden Ansprüche, **dadurch gekennzeichnet, dass** das Gerät ein Gerät zum Lesen einer Hochfrequenz eines Transponders ist.

9. Hand-Gerät zum Lesen codierter Information nach einem der vorhergehenden Ansprüche, **dadurch gekennzeichnet, dass** das mindestens eine leuchtende Anzeigeelement eine LED umfasst.

10. Hand-Gerät zum Lesen codierter Information nach einem der vorhergehenden Ansprüche, **dadurch gekennzeichnet, dass** die leuchtenden Anzeigeelemente geeignet sind, Licht kontinuierlich zu emittieren, wenn das Gerät sich im Stand-by-Zustand befindet.

11. Hand-Gerät zum Lesen codierter Information nach einem der Ansprüche 1 bis 9, **dadurch gekennzeichnet, dass** die leuchtenden Anzeigeelemente geeignet sind intermittierend zu blinken, wenn sich das Gerät in dem Stand-by-Zustand befindet.

12. Hand-Gerät zum Lesen codierter Information nach einem der Anspruche 1 bis 9, **dadurch** gekennzeiohnet, dass es mit weiteren leuchtenden Anzeigeelementen versehen ist, die bei den Fenstern (4) angeordnet sind, und die geeignet sind, Licht kontinuierlich zu emittieren, wenn sich das Gerät in dem Stand-by-Zustand befindet.

13. Hand-Gerät zum Lesen codierter Information nach einem der Ansprüche 1, bis 9, **dadurch gekennzeichnet, dass** es mit weiteren leuchtenden Anzeigeelementen versehen ist, die bei den Fenstern (4) angeordnet sind, und die geeignet sind, intermittierend zu blinken, wenn sich das Gerät in dem Stand-by-Zustand befindet.

14. Hand-Gerät zum Lesen codierter Information nach einem der vorhergehenden Ansprüche, **dadurch gekennzeichnet, dass** es mit einem weiteren leuchtenden Anzeigeelement versehen ist, welches bei dem Codelese-Fenster (5) angeordnet ist, und welches geeignet ist, Licht kontinuierlich zu emittieren, wenn sich das Gerät in dem Stand-by-Zustand befindet.

15. Hand-Gerät zum Lesen codierter Information gemäß einem der vorhergehenden Ansprüche, **dadurch gekennzeichnet, dass** es mit einem weiteren leuchtenden Anzeigeelement versehen ist, welches bei dem Fenster (5) zum Lesen des Codes angeordnet ist und geeignet ist, intermittierend zu blinken, wenn sich das Gerät im Stand-by-Zustand befindet.

16. Hand-Gerät zum Lesen codierter Information nach einem der Ansprüche 12 bis 15,
**dadurch gekennzeichnet, dass** mindestens eines der weiteren leuchtenden Anzeigeelemente eine LED umfasst.

17. Hand-Gerät zum Lesen codierter Information nach einem der vorhergehenden Ansprüche, **dadurch gekennzeichnet, dass** das Außengehäuse (1) mit zusätzlichen Fenstern versehen ist, die geeignet sind, Licht, das von den leuchtenden Anzeigeelementen und/oder von den weiteren leuchtenden Anzeigeelementen emittiert wird, zu streuen.

18. Hand-Gerät zum Lesen codierter Information nach einem der vorhergehenden Ansprüche, **dadurch gekennzeichnet, dass** es mit Ton-Anzeigemitteln versehen ist, die geeignet sind, mindestens einen Betriebszustand des Gerätes anzuzeigen.

19. Hand-Gerät zum Lesen codierter Information nach einem der vorhergehenden Ansprüche; **dadurch gekennzeichnet, dass** es mit Ton-Mitteln zum Erkennen der Position des Gerätes versehen ist, die von einem Grundteil desselben Gerätes aus aktivierbar sind.

20. Hand-Gerät zum Lesen codierter Information nach einem der vorhergehenden Ansprüche, **dadurch gekennzeichnet, dass** es mit sichtbaren Mitteln zum Erkennen der Position des Gerätes versehen ist, die von einem Grundteil desselben Gerätes aus betätigbar sind.

## Revendications

1. Dispositif portatif de lecture d'information codée, comprenant :
- une coque externe (1) adaptée pour contenir des éléments optiques et/ou électroniques pour la lecture de l'information codée ;
- un premier élément d'indication lumineuse adapté pour indiquer au moins un état de fonctionnement dudit dispositif et disposé à une première fenêtre d'indication (4) réalisée dans cette coque externe (1) ; et
- une fenêtre (5) de lecture d'information codée,
**caractérisé en ce qu'**il est pourvu d'au moins un second élément d'indication lumineuse adapté pour indiquer ledit état de fonctionnement et disposé à une seconde fenêtre d'indication (4) réalisée dans cette coque externe (1), les première et seconde fenêtres d'indication (4) étant disposées sur des plans différents, de façon à permettre à l'utilisateur de détecter ledit état de fonctionnement selon des orientations différentes du dispositif.

2. Dispositif portatif de lecture d'information codée selon la revendication 1,
**caractérisé en ce que** ledit au moins un second élément d'indication lumineuse est unique et les première et seconde fenêtres d'indication (4) définissent des plans qui forment l'un par rapport à l'autre un angle α d'une ouverture supérieure à 180°.

3. Dispositif portatif de lecture d'information codée selon la revendication 2,
**caractérisé en ce** l'ouverture de l'angle α est de préférence supérieure ou égale à 270°.

4. Dispositif portatif de lecture d'information codée selon la revendication 3,
**caractérisé en ce** l'ouverture de l'angle α est égale à 318°.

5. Dispositif portatif de lecture d'information codée selon l'une quelconque des revendications précédentes, **caractérisé en ce que** ledit au moins un état de fonctionnement est l'état de lecture réussie de l'information codée.

6. Dispositif portatif de lecture d'information codée selon l'une quelconque des revendications précédentes, **caractérisé en ce que** ledit au moins un état de fonctionnement est l'état d'attente.

7. Dispositif portatif de lecture d'information codée selon l'une quelconque des revendications précédentes, **caractérisé en ce que** le dispositif est un dispositif de lecture d'un code optique.

8. Dispositif portatif de lecture d'information codée selon l'une quelconque des revendications précédentes, **caractérisé en ce que** le dispositif est un dispositif de lecture radiofréquence d'un transpondeur.

9. Dispositif portatif de lecture d'information codée selon l'une quelconque des revendications précédentes, **caractérisé en ce qu'**au moins un des éléments d'indication lumineuse comprend une DEL.

10. Dispositif portatif de lecture d'information codée selon l'une quelconque des revendications précédentes, **caractérisé en ce que** les éléments d'indication lumineuse sont adaptés pour émettre de la lumière de façon continue lorsque le dispositif est en état d'attente.

11. Dispositif portatif de lecture d'information codée selon l'une quelconque des revendications 1-9, **caractérisé en ce que** les éléments d'indication lumineuse sont adaptés pour faire des éclairs de façon intermittente lorsque le dispositif est en état d'attente.

12. Dispositif portatif de lecture d'information codée selon l'une quelconque des revendications 1-9, **caractérisé en ce qu'**il est pourvu d'autres éléments d'indication lumineuse disposés à ces fenêtres (4), et adaptés pour émettre de la lumière de façon continue lorsque le dispositif est en état d'attente.

13. Dispositif portatif de lecture d'information codée selon l'une quelconque des revendications 1-9, **caractérisé en ce qu'**il est pourvu d'autres éléments d'indication lumineuse disposés à ces fenêtres (4), et adaptés pour faire des éclairs de façon intermittente lorsque le dispositif est en état d'attente.

14. Dispositif portatif de lecture d'information codée selon l'une quelconque des revendications précédentes, **caractérisé en ce qu'**il est pourvu d'un autre élément d'indication lumineuse disposé à la fenêtre de lecture de code (5), et adapté pour émettre de la lumière de façon continue lorsque le dispositif est en état d'attente.

15. Dispositif portatif de lecture d'information codée selon l'une quelconque des revendications précédentes, **caractérisé en ce qu'**il est pourvu d'un autre élément d'indication lumineuse disposé à la fenêtre de lecture de code (5), et adapté pour faire des éclairs de façon intermittente lorsque le dispositif est en état d'attente.

16. Dispositif portatif de lecture d'information codée selon l'une quelconque des revendications 12-15, **caractérisé en ce qu'**au moins l'un des autres éléments d'indication lumineuse comprend une DEL.

17. Dispositif portatif de lecture d'information codée selon l'une quelconque des revendications précédentes, **caractérisé en ce que** la coque externe (1) est pourvue de fenêtres supplémentaires adaptées pour diffuser la lumière émise par les éléments d'indication lumineuse et/ou par lesdits autres éléments d'indication lumineuse.

18. Dispositif portatif de lecture d'information codée selon l'une quelconque des revendications précédentes, **caractérisé en ce qu'**il est pourvu de moyens d'indication sonore adaptés pour indiquer au moins un état de fonctionnement dudit dispositif.

19. Dispositif portatif de lecture d'information codée selon l'une quelconque des revendications précédentes, **caractérisé en ce qu'**il est pourvu de moyens sonores pour individualiser la position du dispositif, ces moyens sonores étant actionnables depuis une base du même dispositif.

20. Dispositif portatif de lecture d'information codée selon l'une quelconque des revendications précédentes, **caractérisé en ce qu'**il est pourvu de moyens visuels pour individualiser la position du dispositif, ces moyens visuels étant actionnables depuis une base du même dispositif.
